# EUROPEAN PATENT APPLICATION

(11) **EP 4 122 877 A1**
(43) Date of publication of application: **25.01.2023**
(21) Application number: 21766094.3
(22) Date of filing: 19.01.2021
(51) Int. Cl.: C01B 3/50, H01M 8/04, H01M 8/0662, H01M 8/0668, H01M 8/249

(54) **FUEL CELL SYSTEM**

(30) Priority: 16.03.2020 JP 2020044871
(71) Applicant: Panasonic Intellectual Property Management Co., Ltd., Osaka-shi, Osaka 540-6207 (JP)
(72) Inventor: TAMURA Yoshio, Osaka-shi, Osaka 540-6207 (JP); KARINO Tsuyoshi, Osaka-shi, Osaka 540-6207 (JP); OZEKI Masataka, Osaka-shi, Osaka 540-6207 (JP); TAKEDA Kenyu, Osaka-shi, Osaka 540-6207 (JP); TAGUCHI Kiyoshi, Osaka-shi, Osaka 540-6207 (JP)
(74) Representative: Grünecker Patent- und Rechtsanwälte PartG mbB
(86) International application number: PCT/JP2021/001568
(87) International publication number: WO 2021/186879

(57) **Abstract**

The present disclosure provides a fuel cell system (100) to which raw material hydrogen containing hydrogen, nitrogen, and carbon monoxide is externally supplied, the fuel cell system (100) including: a carbon monoxide removing unit (1, 2) configured to remove part of the carbon monoxide from the raw material hydrogen to generate a hydrogen-containing gas, and discharge the hydrogen-containing gas; and a first fuel cell (3) configured to generate electric power by using the hydrogen-containing gas. The concentration of the nitrogen contained in the raw material hydrogen is configured to be higher than 25%.

## Description

### TECHNICAL FIELD

The present disclosure relates to a fuel cell system including a fuel cell configured to generate electric power by the use of a hydrogen-containing gas.

### BACKGROUND ART

Patent Literature 1 discloses a fuel cell system configured to: generate a hydrogen-containing gas containing hydrogen, nitrogen, carbon monoxide, and ammonia from a nitrogen-containing material by the use of a reformer; reduce the concentration of the carbon monoxide contained in the hydrogen-containing gas (hereinafter, sometimes referred to as raw material hydrogen) through a shift reaction by the use of a shift converter; remove the ammonia from the hydrogen-containing gas by the use of an ammonia remover; generate a hydrogen-containing gas from which the carbon monoxide is removed through an oxidation reaction by the use of a carbon monoxide remover; and generate electric power using the hydrogen-containing gas by the use of a fuel cell.

The above-described fuel cell system includes the shift converter, the ammonia remover, the carbon monoxide remover, and the fuel cell.

### Citation List

Patent Literature 1: Unexamined Japanese Patent Publication No. 2012-46395

### SUMMARY OF INVENTION

The present disclosure provides a fuel cell system being compact and capable of generating electric power by the use of raw material hydrogen containing hydrogen, nitrogen, and carbon monoxide.

The fuel cell system in the present disclosure includes: a carbon monoxide removing unit configured to remove part of carbon monoxide from raw material hydrogen to generate a hydrogen-containing gas, and discharge a hydrogen-containing gas, the raw material hydrogen containing hydrogen, nitrogen, and the carbon monoxide and having a nitrogen concentration higher than 25%,; and a first fuel cell configured to generate electric power by the use of the hydrogen-containing gas.

The fuel cell system in the present disclosure does not generate ammonia during the generation of electric power. This allows an ammonia remover to be smaller. Thus, the fuel cell system can be configured to be more compact.

### BRIEF DESCRIPTION OF DRAWINGS

FIG. 1 is a block diagram of a fuel cell system according to a first embodiment.
FIG. 2 is a block diagram of a fuel cell system according to a second embodiment.
FIG. 3 is a block diagram of a fuel cell system according to a third embodiment.
FIG. 4 is a block diagram of a fuel cell system according to other embodiments.

### DESCRIPTION OF EMBODIMENTS

### (Underlying Knowledge Forming Basis of the Present Disclosure)

At the time when the inventors came up with the present disclosure, the technology of fuel cell systems was such that a hydrogen-containing gas containing hydrogen, nitrogen, carbon monoxide, and ammonia was generated from a nitrogen-containing material including town gas as a main component by the use of a reformer through a reforming reaction, and the concentration of the carbon monoxide contained in the hydrogen-containing gas (hereinafter, sometimes referred to as raw material hydrogen) was reduced using a shift converter through a shift reaction, and then, the ammonia contained in the hydrogen-containing gas was removed using an ammonia remover, and electric power was generated using a hydrogen-containing gas from which carbon monoxide was removed through an oxidation reaction by the use of a carbon monoxide remover.

Note that natural gas was assumed to be supplied as a direct material, and, for example, in Europe, the concentration of nitrogen in the material was 25% at the maximum.

Under such circumstances, when, instead of natural gas, a gas (hereinafter, sometimes referred to as raw material hydrogen) containing hydrogen as a main component and having a nitrogen content higher than 25% was used as a raw material, the nitrogen reacted with the hydrogen to form ammonia in a reformer, whereby there was arisen the risk of the poisoning and deterioration of a fuel cell by the ammonia.

In order to prevent the deterioration of a fuel cell, ammonia needs to be removed. Here, there was a problem that, when the concentration of nitrogen contained in raw material hydrogen is higher, an ammonia remover is larger in size.

Therefore, the present disclosure provides a compact fuel cell system capable of, even when the nitrogen content of raw material hydrogen is higher than 25%, preventing the generation of ammonia and thereby achieving a smaller-sized ammonia remover.

Hereinafter, embodiments will be described in detail with reference to the drawings. Descriptions that are more detailed than necessary may, however, be omitted. For example, detailed descriptions on already well-known matters and overlapping descriptions on substantially the same configurations may be omitted.

The accompanying drawings and the following descriptions are provided to help those skilled in the art fully understand the present disclosure, and do not intend to thereby restrict the subject matter recited in the claims.

### (First Embodiment)

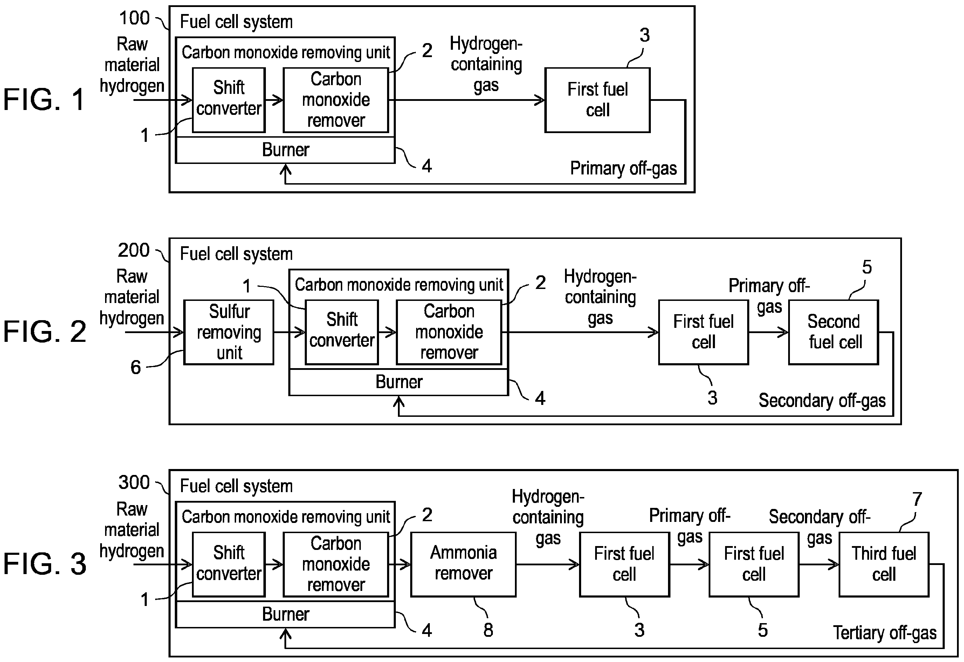

Hereinafter, the first embodiment will be described using FIG. 1. FIG. 1 is a block diagram of fuel cell system 100 according to the first embodiment.

### [1-1. Configuration]

As illustrated in FIG. 1, fuel cell system 100 according to the present embodiment includes shift converter 1, carbon monoxide remover 2, first fuel cell 3, and burner 4.

Shift converter 1 is configured to remove part of carbon monoxide from raw material hydrogen through a shift reaction. In the present embodiment, the raw material hydrogen contains hydrogen, nitrogen, and the carbon monoxide, and the concentration of the nitrogen is higher than 25%.

Carbon monoxide remover 2 is configured to remove the carbon monoxide through an oxidation reaction. Air is supplied to carbon monoxide remover 2 as an oxygen- containing as for the oxidation reaction.

First fuel cell 3 is configured to generate electric power by the use of a hydrogen-containing gas. First fuel cell 3 includes an electrolyte membrane-electrode assembly in which both main faces of an electrolyte membrane are sandwiched by an anode and a cathode, respectively. The hydrogen-containing gas is supplied to the anode, and air which contains oxygen is supplied to the cathode, whereby first fuel cell 3 generates electric power.

Burner 4 is configured to burn a primary off-gas and thereby heat shift converter 1 and carbon monoxide remover 2 which constitute a carbon monoxide removing unit. The primary off-gas is a gas (hydrogen-containing gas) having passed through first fuel cell 3 without being consumed for power generation in first fuel cell 3, out of the hydrogen-containing gas having been supplied to first fuel cell 3.

### [1-2. Operation]

The operation and action of fuel cell system 100 configured as described above according to the present embodiment will be described below.

First, the operation of generating electric power by the use of raw material hydrogen in fuel cell system 100 will be described, based on FIG. 1.

The raw material hydrogen containing hydrogen, nitrogen, and carbon monoxide is supplied to shift converter 1 in order to remove part of the carbon monoxide from the raw material hydrogen. With this operation, the concentration of the carbon monoxide contained in the raw material hydrogen can be reduced by shift converter 1. However, when a hydrogen-containing gas having passed through shift converter 1 is supplied to first fuel cell 3, the concentration of the carbon monoxide contained in the hydrogen-containing gas having passed through shift converter 1 is still high, in other words, the concentration of the carbon monoxide is not sufficiently reduced, and hence, there is a possibility to poison first fuel cell 3.

Therefore, the hydrogen-containing gas having been discharged from shift converter 1 is supplied to carbon monoxide remover 2 so that the concentration of the carbon monoxide in the hydrogen-containing gas to be supplied to first fuel cell 3 is further reduced. As described above, the hydrogen-containing gas having a reduced carbon monoxide concentration is supplied to first fuel cell 3, whereby first fuel cell 3 can generate electric power by the use of hydrogen contained in the hydrogen-containing gas.

Here, first fuel cell 3 cannot use up hydrogen contained in the hydrogen-containing gas for power generation. The hydrogen-containing gas containing hydrogen remaining without being consumed by first fuel cell 3 is discharged from first fuel cell 3 as a primary off-gas. If the primary off-gas is discarded, in other words, if the primary off-gas is discharged to the outside of fuel cell system 100, hydrogen goes to waste. Therefore, the primary off-gas is supplied to burner 4 and burned. Thus, energy can be extracted as heat in burner 4.

Shift converter 1 and carbon monoxide remover 2, which constitute the carbon monoxide removing unit, can maintain the capability of removing carbon monoxide as long as shift converter 1 and carbon monoxide remover 2 are maintained at a high temperature of 100 °C or higher. Both shift converter 1 and carbon monoxide remover 2 cause an exothermic reaction, but, in shift converter 1 and carbon monoxide remover 2, a temperature decrease due to heat dissipation is relatively greater than a temperature increase due to the exothermic reaction, so that it is difficult to maintain shift converter 1 and carbon monoxide remover 2 at the high temperature. Therefore, by the use of heat generated in burner 4, shift converter 1 and carbon monoxide remover 2 are heated. This heating allows each of shift converter 1 and carbon monoxide remover 2 to be maintained at an appropriate temperature for the reaction. Thus, shift converter 1 and carbon monoxide remover 2 can maintain the capability of removing carbon monoxide. Thus, fuel cell system 100 can stably generate electric power.

### [1-3. Effects]

As described above, fuel cell system 100 according to the present embodiment includes: the carbon monoxide removing unit configured to remove part of carbon monoxide from raw material hydrogen having a nitrogen concentration higher than 25% to generate a hydrogen-containing gas, and discharge a hydrogen-containing gas; and first fuel cell 3 configured to generate electric power by the use of the hydrogen-containing gas.

With this configuration, fuel cell system 100 does not generate ammonia during power generation. Therefore, in the case where the raw material hydrogen does not contain ammonia, an ammonia remover is unnecessary, and accordingly the fuel cell system can be more compact.

The carbon monoxide removing unit includes: shift converter 1 configured to remove part of the carbon monoxide from the raw material hydrogen through a shift reaction; and carbon monoxide remover 2 configured to remove the carbon monoxide from the hydrogen-containing gas discharged from shift converter 1, through an oxidation reaction.

In the present embodiment, the carbon monoxide removing unit includes both shift converter 1 and carbon monoxide remover 2, but, may include either shift converter 1 or carbon monoxide remover 2 as long as the carbon monoxide concentration of the hydrogen-containing gas to be supplied to first fuel cell 3 can be reduced to a degree that the problem of poisoning first fuel cell 3 does not arise.

Thus, the carbon monoxide removing unit can be provided appropriately depending on the concentration of the carbon monoxide contained in the raw material hydrogen. Therefore, an unnecessary device can be eliminated from the fuel cell system, so that the fuel cell system can be more compact.

Fuel cell system 100 according to the present embodiment further includes burner 4 configured to heat the carbon monoxide removing unit by the use of the primary off-gas which is a gas out of the hydrogen-containing gas, the gas having passed through first fuel cell 3 without being consumed for power generation.

In the present embodiment, burner 4 is configured to heat both shift converter 1 and carbon monoxide remover 2, but, burner 4 may be configured to heat either shift converter 1 or carbon monoxide remover 2 as long as the carbon monoxide concentration of the hydrogen-containing gas to be supplied to first fuel cell 3 can be reduced to a degree that the problem of poisoning first fuel cell 3 does not arise.

Thus, the carbon monoxide removing unit can be heated appropriately depending on the concentration of carbon monoxide contained in the raw material hydrogen, and an unnecessary heating configuration can be eliminated, so that the fuel cell system can be more compact.

### (Second Embodiment)

Hereinafter, the second embodiment will be described using FIG. 2. FIG. 2 is a block diagram of fuel cell system 200 according to the second embodiment.

### [2-1. Configuration]

As illustrated in FIG. 2, fuel cell system 200 according to the present embodiment includes shift converter 1, carbon monoxide remover 2, first fuel cell 3, burner 4, second fuel cell 5, and sulfur removing unit 6.

In fuel cell system 200 according to the present embodiment, the same constituents as those of the first embodiment are assigned with the same reference marks, and redundant descriptions thereof are omitted.

Second fuel cell 5 is configured to generate electric power by the use of the primary off-gas. The primary off-gas is a gas out of the hydrogen-containing gas having been supplied to first fuel cell 3, the gas having passed through first fuel cell 3 without being consumed for power generation in first fuel cell 3.

The amount of hydrogen contained in the primary off-gas discharged from first fuel cell 3 and supplied to second fuel cell 5 is smaller than the amount of hydrogen contained in the hydrogen-containing gas supplied to first fuel cell 3. Therefore, the power generation output of second fuel cell 5 is configured to be smaller than the power generation output of first fuel cell 3.

Sulfur removing unit 6 is configured to remove a sulfur component from the raw material hydrogen by the use of an adsorbent. If the sulfur component is supplied to shift converter 1, carbon monoxide remover 2, first fuel cell 3, and second fuel cell 5, each of the above-mentioned constituent devices is poisoned. Therefore, sulfur removing unit 6 is provided upstream of shift converter 1 so that each of the above-mentioned constituent devices can be substantially prevented from being poisoned by the sulfur component. As sulfur removing unit 6, for example, an adsorbent capable of adsorbing and removing sulfur is employed.

### [2-2. Operation]

The operation and action of fuel cell system 200 configured as described above according to the present embodiment will be described below.

First, the operation of generating electric power by the use of the raw material hydrogen in fuel cell system 200 will be described, based on FIG. 2.

Besides hydrogen, nitrogen, and carbon monoxide, the raw material hydrogen sometimes contains a sulfur component. In order to remove the sulfur component, the raw material hydrogen is supplied to sulfur removing unit 6. The raw material hydrogen with a sulfur concentration reduced by sulfur removing unit 6 is supplied to shift converter 1 and carbon monoxide remover 2, which constitute the carbon monoxide removing unit, and is made into a hydrogen-containing gas with a reduced concentration of the carbon monoxide.

First fuel cell 3 generates electric power by the use of the hydrogen-containing gas. First fuel cell 3 cannot use up the hydrogen-containing gas supplied to first fuel cell 3 for power generation. Out of the hydrogen-containing gas having been supplied to first fuel cell 3, a gas remaining without being consumed for power generation in first fuel cell 3 is discharged from first fuel cell 3 as a primary off-gas.

The primary off-gas discharged from first fuel cell 3 is supplied to second fuel cell 5. Second fuel cell 5 generates electric power by the use of the primary off-gas. With this operation, fuel cell system 200 can generate electric power in the amounts that cannot be achieved only with first fuel cell 3.

The amount of hydrogen contained in the hydrogen-containing gas supplied to first fuel cell 3 is larger than the amount of hydrogen contained in the primary off-gas discharged from first fuel cell 3 and supplied to second fuel cell 5. Thus, the power generation output of first fuel cell 3 may be configured to be larger than the power generation output of second fuel cell 5.

Second fuel cell 5 cannot use up the primary off-gas supplied to second fuel cell 5 for power generation. Out of the primary off-gas having been supplied to second fuel cell 5, a gas remaining without being consumed for power generation in second fuel cell 5 is discharged as a secondary off-gas from second fuel cell 5.

If the secondary off-gas is discharged without being consumed in fuel cell system 200, energy contained in the secondary off-gas goes to waste. Therefore, the secondary off-gas is supplied to and burned in burner 4, and energy contained in the secondary off-gas is extracted as heat energy, and the heat energy is used for heating in shift converter 1 and carbon monoxide remover 2 which constitute the carbon monoxide removing unit.

### [2-3. Effects]

As described above, fuel cell system 200 according to the present embodiment includes: the carbon monoxide removing unit configured to remove part of carbon monoxide from the raw material hydrogen having a nitrogen concentration higher than 25% and discharge a hydrogen-containing gas; and first fuel cell 3 configured to generate electric power by the use of the hydrogen-containing gas.

The carbon monoxide removing unit includes: shift converter 1 configured to remove part of the carbon monoxide from the raw material hydrogen through a shift reaction; and carbon monoxide remover 2 configured to remove the carbon monoxide from the hydrogen-containing gas discharged from shift converter 1, through an oxidation reaction.

Fuel cell system 200 according to the present embodiment further includes second fuel cell 5 configured to generate electric power by the use of the primary off-gas which is a gas out of the hydrogen-containing gas, the gas having passed through first fuel cell 3 without being consumed for power generation. The power generation output of second fuel cell 5 is lower than the power generation output of first fuel cell 3.

Thus, in fuel cell system 200 according to the present embodiment, second fuel cell 5 can generate electric power by the use of the primary off-gas discharged from first fuel cell 3. Therefore, fuel cell system 200 can use hydrogen contained in the raw material hydrogen without wasting the hydrogen.

Fuel cell system 200 according to the present embodiment further includes burner 4 configured to heat the carbon monoxide removing unit by the use of the secondary off-gas which is a gas out of the primary off-gas, the gas having passed through second fuel cell 5 without being consumed for power generation.

Thus, fuel cell system 200 according to the present embodiment can heat the carbon monoxide removing unit by the use of the secondary off-gas discharged from second fuel cell 5. Therefore, fuel cell system 200 can use the raw material hydrogen without wasting the raw material hydrogen.

Fuel cell system 200 according to the present embodiment further includes sulfur removing unit 6 configured to remove sulfur from the raw material hydrogen to be supplied to the carbon monoxide removing unit.

With this configuration, fuel cell system 200 according to the present embodiment can remove a sulfur component from the raw material hydrogen to be supplied to shift converter 1, by the use of sulfur removing unit 6. Therefore, fuel cell system 200 can stably generate electric power even when a sulfur component is contained in the raw material hydrogen.

Note that sulfur removing unit 6 according to the present embodiment is not limited to an adsorbent for sulfur removal, and as sulfur removing unit 6, a hydrogenation desulfurization unit configured to remove sulfur through hydrogenation desulfurization may be used. In the case where the hydrogenation desulfurization unit is used, the use of hydrogen contained in the raw material hydrogen allows the concentration of a sulfur component to be further reduced.

A temperature range suitable for the hydrogenation desulfurization unit is similar to temperature ranges of shift converter 1 and carbon monoxide remover 2, and therefore, the hydrogenation desulfurization unit may be heated by shift converter 1, carbon monoxide remover 2, or burner 4.

Thus, the concentration of the sulfur component contained in the raw material hydrogen can be further reduced. Therefore, the poisoning of shift converter 1, carbon monoxide remover 2, first fuel cell 3, and second fuel cell 5 can be further prevented.

### (Third Embodiment)

Hereinafter, the third embodiment will be described using FIG. 3. FIG. 3 is a block diagram of fuel cell system 300 according to the third embodiment.

### [3-1. Configuration]

As illustrated in FIG. 3, fuel cell system 300 according to the present embodiment includes shift converter 1, carbon monoxide remover 2, first fuel cell 3, burner 4, second fuel cell 5, third fuel cell 7, and ammonia remover 8.

In fuel cell system 300 according to the present embodiment, the same constituents as those of the first embodiment or the second embodiment are assigned with the same reference marks, and redundant descriptions thereof are omitted.

Third fuel cell 7 is configured to generate electric power by the use of the secondary off-gas. The secondary off-gas is a gas out of the primary off-gas having been supplied to second fuel cell 5, the gas having passed through second fuel cell 5 without being consumed for power generation in second fuel cell 5.

The amount of hydrogen contained in the secondary off-gas discharged from second fuel cell 5 and supplied to third fuel cell 7 is smaller than the amount of hydrogen contained in the primary off-gas supplied to second fuel cell 5. Therefore, the power generation output of third fuel cell 7 may be configured to be lower than the power generation output of second fuel cell 5. In this case, the power generation output of second fuel cell 5 is lower than the power generation output of first fuel cell 3, and the power generation output of third fuel cell 7 is lower than the power generation output of second fuel cell 5.

Ammonia remover 8 is configured to remove ammonia from the hydrogen-containing gas to be supplied to first fuel cell 3. By the use of ammonia remover 8, the concentration of the ammonia contained in the hydrogen-containing gas is reduced to a degree that first fuel cell 3 is not poisoned.

### [3-2. Operation]

The operation and action of fuel cell system 300 configured as described above will be described below.

First, the operation of generating electric power by the use of the raw material hydrogen in fuel cell system 300 will be described, based on FIG. 3.

Besides hydrogen, nitrogen, and carbon monoxide, the raw material hydrogen sometimes contains ammonia. In order to remove the ammonia, the hydrogen-containing gas having passed through shift converter 1 and carbon monoxide remover 2, which constitute the carbon monoxide removing unit, and thereby having a reduced concentration of carbon monoxide is supplied to ammonia remover 8.

Ammonia remover 8 reduces the concentration of the ammonia contained in the hydrogen-containing gas to a degree that first fuel cell 3 is not poisoned. The hydrogen-containing gas with the reduced concentration of ammonia is supplied to first fuel cell 3.

First fuel cell 3 generates electric power by the use of the hydrogen-containing gas having the ammonia concentration reduced by ammonia remover 8. First fuel cell 3 cannot use up the hydrogen-containing gas supplied to first fuel cell 3 for power generation. Out of the hydrogen-containing gas supplied to first fuel cell 3, a gas remaining without being consumed for power generation in first fuel cell 3 is discharged from first fuel cell 3 as the primary off-gas. The primary off-gas is supplied to second fuel cell 5.

Second fuel cell 5 cannot use up the primary off-gas supplied to second fuel cell 5 for power generation. Out of the primary off-gas supplied to second fuel cell 5, a gas remaining without being consumed for power generation in second fuel cell 5 is discharged from second fuel cell 5 as the secondary off-gas. The secondary off-gas is supplied to third fuel cell 7.

Third fuel cell 7 cannot use up the secondary off-gas supplied to third fuel cell 7 for power generation. Out of the secondary off-gas supplied to third fuel cell 7, a gas remaining without being consumed for power generation in third fuel cell 7 is discharged as a tertiary off-gas from third fuel cell 7. The tertiary off-gas is supplied to burner 4.

Burner 4 burns the tertiary off-gas to heat shift converter 1 and carbon monoxide remover 2, which constitute the carbon monoxide removing unit.

### [3-3. Effects]

As described above, fuel cell system 300 according to the present embodiment includes: the carbon monoxide removing unit configured to remove part of carbon monoxide from the raw material hydrogen having a nitrogen concentration higher than 25% and discharge a hydrogen-containing gas; and first fuel cell 3 configured to generate electric power by the use of the hydrogen-containing gas.

The carbon monoxide removing unit includes: shift converter 1 configured to remove part of the carbon monoxide from the raw material hydrogen through a shift reaction; and carbon monoxide remover 2 configured to remove the carbon monoxide from the hydrogen-containing gas discharged from shift converter 1, through an oxidation reaction.

Fuel cell system 300 according to the present embodiment further includes: second fuel cell 5 configured to generate electric power by the use of the primary off-gas which is a gas out of the hydrogen-containing gas, the gas having passed through first fuel cell 3 without being consumed for power generation; and third fuel cell 7 configured to generate electric power by the use of the secondary off-gas which is a gas out of the primary off-gas, the gas having passed through second fuel cell 5 without being consumed for power generation.

The power generation output of second fuel cell 5 is lower than the power generation output of first fuel cell 3, and the power generation output of third fuel cell 7 is lower than the power generation output of second fuel cell 5.

Thus, in fuel cell system 300 according to the present embodiment, second fuel cell 5 can generate electric power by the use of the primary off-gas discharged from first fuel cell 3, and third fuel cell 7 can generate electric power by the use of the secondary off-gas discharged from second fuel cell 5. Therefore, fuel cell system 300 can use hydrogen contained in the raw material hydrogen without wasting the hydrogen.

Fuel cell system 300 according to the present embodiment further includes burner 4 configured to heat the carbon monoxide removing unit by the use of the tertiary off-gas which is a gas out of the secondary off-gas, the gas having passed through third fuel cell 7 without being consumed for power generation.

Thus, fuel cell system 300 according to the present embodiment can heat the carbon monoxide removing unit by the use of the tertiary off-gas discharged from third fuel cell 7. Therefore, fuel cell system 300 can use the raw material hydrogen without wasting the raw material hydrogen.

Fuel cell system 300 according to the present embodiment further includes ammonia remover 8 disposed upstream of first fuel cell 3 and configured to remove ammonia.

Thus, fuel cell system 300 according to the present embodiment can remove ammonia from the hydrogen-containing gas to be supplied to first fuel cell 3. Therefore, fuel cell system 300 can stably generate electric power even when ammonia is contained in the raw material hydrogen.

### (Other Embodiments)

As described above, the first embodiment to the third embodiment have been described as illustrative examples of the technology disclosed in the present application. However, the technology in the present disclosure is not limited to the embodiments, and is also applicable to embodiments in which modifications, substitutions, additions, omissions, or the likes are made. In addition, constituents described in the first embodiment to the third embodiment can be combined to provide a new embodiment.

### Hereinafter, other embodiments will be described.

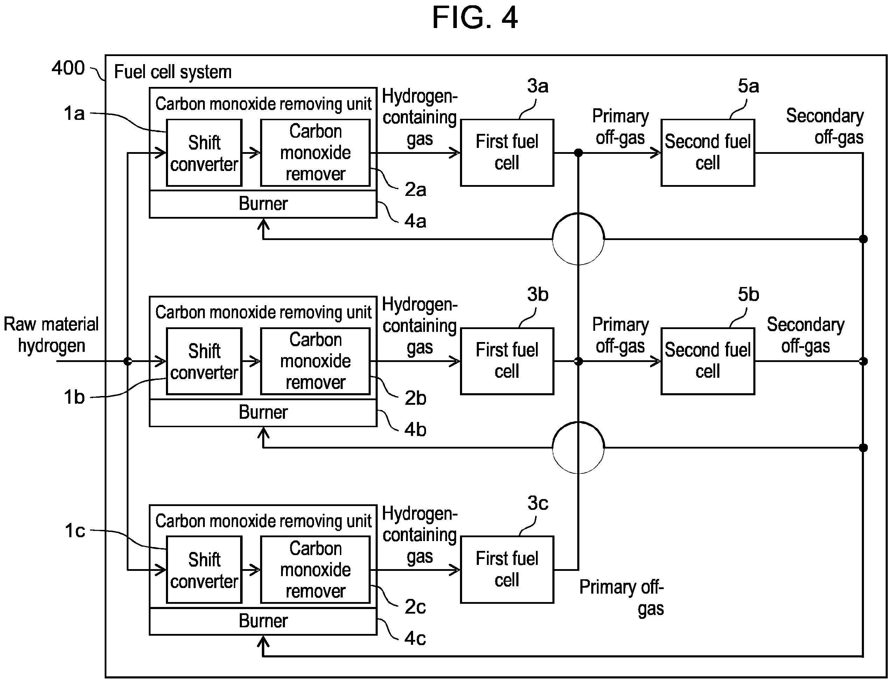

In the second embodiment, there has been described the configuration in which one shift converter 1, one carbon monoxide remover 2, one first fuel cell 3, one second fuel cell 5, and one burner 4 are connected in series. However, the present disclosure is not limited to this configuration. Like fuel cell system 400 illustrated in FIG. 4, a fuel cell system may be configured to include a plurality of shift converters 1a, 1b, and 1c, a plurality of carbon monoxide removers 2a, 2b, and 2c, a plurality of first fuel cells 3a, 3b, and 3c, a plurality of second fuel cells 5a and 5b, and a plurality of burners 4a, 4b, and 4c.

In the case where a plurality of apparatuses are disposed in parallel like fuel cell system 400 illustrated in FIG. 4, when the sum of the power generation outputs of second fuel cells 5a and 5b is made lower than the sum of the power generation outputs of first fuel cells 3a, 3b, and 3c, hydrogen contained in the raw material hydrogen can be used without being wasted.

As illustrated in FIG. 4, the number of second fuel cells 5a and 5b installed is configured to be smaller than the number of first fuel cells 3a, 3b, and 3c installed, whereby, even when the power generation output of each of first fuel cells 3a, 3b, and 3c is the same as the power generation output of each of second fuel cells 5a and 5b, the sum of the power generation outputs of second fuel cells 5a and 5b can be lower than the sum of the power generation outputs of first fuel cells 3a, 3b, and 3c.

In the first embodiment to the third embodiment, both shift converter 1 and carbon monoxide remover 2 are used as the carbon monoxide removing unit, but, the present disclosure is not limited to this configuration, and either shift converter 1 or carbon monoxide remover 2 may be used as the carbon monoxide removing unit. Depending on the concentration of carbon monoxide contained in the raw material hydrogen and the concentration of carbon monoxide that poisons first fuel cell 3, the combination of shift converter 1 and carbon monoxide remover 2 may be changed.

In the case where the concentration of carbon monoxide contained in the raw material hydrogen is high, carbon monoxide may be reduced using shift converter 1. In the case where the concentration of carbon monoxide contained in the raw material hydrogen is low, carbon monoxide may be reduced using carbon monoxide remover 2 only. In the case where the carbon monoxide concentration of the hydrogen-containing gas to be supplied to first fuel cell 3 is not controlled to a low level and thereby there arises a possibility that first fuel cell 3 is poisoned by carbon monoxide, carbon monoxide remover 2 may be used.

In the first embodiment to the third embodiment, besides hydrogen, nitrogen, and carbon monoxide, the raw material hydrogen sometimes contains ammonia.

In the case where the ammonia concentration of the raw material hydrogen is high and thereby there arises a possibility that ammonia poisons first fuel cell 3, ammonia remover 8 may be provided like the third embodiment. In contrast, in the case where the ammonia concentration of the raw material hydrogen is low and ammonia contained in the hydrogen-containing gas does not poison first fuel cell 3, ammonia remover 8 may not be provided.

In the third embodiment, ammonia remover 8 is disposed between carbon monoxide remover 2 and first fuel cell 3, but an installation place for ammonia remover 8 may not be between carbon monoxide remover 2 and first fuel cell 3 as long as ammonia remover 8 is disposed upstream of first fuel cell 3. For example, ammonia remover 8 may be disposed upstream of shift converter 1 so that ammonia is removed from the raw material hydrogen by ammonia remover 8 and the raw material hydrogen from which the ammonia has been removed is supplied to shift converter 1. Alternatively, ammonia remover 8 may be disposed between shift converter 1 and carbon monoxide remover 2.

Note that, the above-described exemplary embodiments are merely for exemplifying the technology of the present disclosure, and therefore, the exemplary embodiments may be subjected to various modifications, substitutions, additions, omissions, or the likes within the scope of the claims and their equivalents.

### INDUSTRIAL APPLICABILITY

The present disclosure is applicable to a fuel cell system that generates electric power by the use of raw material hydrogen containing hydrogen, nitrogen, and carbon monoxide. Specifically, the present disclosure is applicable to, for example, power generation in which a gas containing surplus hydrogen discharged in the industrial field is used.

### REFERENCE MARKS IN THE DRAWINGS

1, 1a, 1b, 1c...shift converter
2, 2a, 2b, 2c...carbon monoxide remover
3, 3a, 3b, 3c ... first fuel cell
4, 4a, 4b, 4c...burner
5, 5a, 5b...second fuel cell
6...sulfur removing unit
7...third fuel cell
8...ammonia remover
100...fuel cell system
200...fuel cell system
300...fuel cell system
400...fuel cell system

## Claims

1. A fuel cell system to which raw material hydrogen containing hydrogen, nitrogen, and carbon monoxide is externally supplied, the fuel cell system comprising:
a carbon monoxide removing unit configured to remove part of the carbon monoxide from the raw material hydrogen to generate a hydrogen-containing gas, and discharge the hydrogen-containing gas; and
a first fuel cell configured to generate electric power by using the hydrogen-containing gas,
wherein a concentration of the nitrogen contained in the raw material hydrogen is higher than 25%.

2. The fuel cell system according to claim 1,
wherein the carbon monoxide removing unit includes at least one of:
a shift converter configured to remove part of the carbon monoxide from the raw material hydrogen through a shift reaction; and
a carbon monoxide remover configured to remove part of the carbon monoxide from the raw material hydrogen through an oxidation reaction.

3. The fuel cell system according to claim 1 or 2, further comprising:
a second fuel cell configured to generate electric power by using a primary off-gas, the primary off-gas being a gas out of the hydrogen-containing gas, the gas passing through the first fuel cell without being consumed for power generation,
wherein a power generation output of the second fuel cell is lower than a power generation output of the first fuel cell.

4. The fuel cell system according to claim 1 or 2, further comprising:
a burner configured to heat the carbon monoxide removing unit by using a primary off-gas, the primary off-gas being a gas out of the hydrogen-containing gas, the gas passing through the first fuel cell without being consumed for power generation.

5. The fuel cell system according to claim 3, further comprising:
a burner configured to heat the carbon monoxide removing unit by using a secondary off-gas, the secondary off-gas being a gas out of the primary off-gas, the gas passing through the second fuel cell without being consumed for power generation.

6. The fuel cell system according to claim 3 or 5, wherein
the first fuel cell is one of a plurality of first fuel cells,
the second fuel cell is one of a plurality of second fuel cells,
the first fuel cells are disposed in parallel,
the second fuel cells are disposed in parallel, and
a sum of power generation outputs of the second fuel cells is lower than a sum of power generation outputs of the first fuel cells.

7. The fuel cell system according to any one of claims 1 to 6, wherein
the carbon monoxide removing unit is one of a plurality of carbon monoxide removing units, and
the carbon monoxide removing units are disposed in parallel.

8. The fuel cell system according to claim 3, further comprising:
a third fuel cell configured to generate electric power by using a secondary off-gas, the secondary off-gas being a gas out of the primary off-gas, the gas passing through the second fuel cell without being consumed for power generation,
wherein a power generation output of the third fuel cell is lower than the power generation output of the second fuel cell.

9. The fuel cell system according to any one of claims 1 to 8, further comprising:
an ammonia remover disposed upstream of the first fuel cell and configured to remove ammonia.

10. The fuel cell system according to any one of claims 1 to 9, further comprising:
a sulfur removing unit configured to remove sulfur from the raw material hydrogen, the raw material hydrogen being to be supplied to the carbon monoxide removing unit.

11. The fuel cell system according to claim 10,
wherein the sulfur removing unit is a hydrogenation desulfurization unit configured to remove sulfur through hydrogenation desulfurization.
